# EUROPEAN PATENT APPLICATION

(11) **EP 3 667 591 A1**
(43) Date of publication of application: **17.06.2020**
(21) Application number: 18212679.7
(22) Date of filing: 14.12.2018
(51) Int. Cl.: G06Q 20/32, G06Q 20/40

(54) **METHOD TO CONTROL A TRANSACTION**

(71) Applicant: SUPSI (Scuola Universitaria Professionale Della Svizzera Italiana), 6928 Manno (CH)
(72) Inventor: AMBROSINI, Luca, 6596 Gordola (CH); PORETTI, Giacomo, 6943 Vezia (CH)
(74) Representative: M. Zardi & Co S.A.

(57) **Abstract**

A method for controlling a transaction is described wherein an electronic device (1) enters within a predefined range of a management device (10) which acquires a radio signal from the electronic device (1), comprising a public key (2) and a user identifier (3); the management device (10) also acquires biometric data (210) of the user, accesses a database (20) containing biometric profiles (21) and compares biometric data (21a) which is stored in association with the identifier of the user (3) and the public key (2) of the electronic device (1) of the user with the acquired biometric data (210); in the event of said data corresponding, the acquisition and comparison operations are carried out again using acquired biometric data (2100) different from the previously acquired biometric data (210), and the transaction is allowed only in the event of the data corresponding again.

## Description

### Field of application

The invention relates to a method for controlling a transaction, for example a banking transaction.

In particular, the invention relates to a control method of the aforementioned type in which a user is equipped with an electronic device by means of which the transaction request may be started and in which a transaction management device is designed to receive the initial transaction request from the electronic user device and to automate the subsequent steps of the transaction.

The method also relates to transactions involving documents, for example digital signatures where a document transaction consists in applying a digital signature of the user to a document which is initially without a signature.

### Prior art

The transaction control methods which are currently known, for example banking or document transactions, including the digital signatures of documents, involve the use of an electronic device for identification of the user, for example a digital card (Smart card), and normally the keying-in of a pin or password or the use of a digital identifier, if necessary certified by a certification authority.

For example, operationally speaking, in order to withdraw cash from an ATM, the user inserts the digital card into an ATM reader, keys in a pin associated with the digital card and, following authentication, the amount to be withdrawn. Similarly, in order to acquire a product from a vending machine, the user inserts a credit card into a reader of the vending machine and keys in a password, before or after selecting a product to be acquired, which authorizes the purchase.

Using similar operations, a digital signature may be generated. In this case, for example, the user is in possession of an electronic device, such as a digital signature kit, a digital card or a USB key which has stored on it a digital identity of the user and the associated control software, necessary for application of the digital signature onto the document. Even though the control methods described above are very widespread, they have a number of drawbacks, especially due to the fact that they always require manual action on the part of the user, whether it be keying-in of a pin or insertion of a card or a USB pen drive in a respective reader.

Moreover, the known methods do not ensure with absolute certainty that the transaction has been performed by the user who is the legitimate owner of the aforementioned digital cards or USB pen drives. In the event of theft of the digital card and the respective pin, for example, the user cannot do anything about it, other than freeze their own bank account, with delays which in some cases may result in undesirable consequences.

The technical problem underlying the present invention is that of devising a method for controlling a banking transaction which is able to improve the security of the transaction, while simplifying the man/machine interaction.

### Summary of the invention

The idea underlying the present invention is that of automating a transaction such that merely the presence of the legitimate owner of a digital identity in the vicinity of a digital transaction management device, be it an ATM, a vending machine or a device for managing documents to be digitally signed, enables a transaction to be performed in a totally safe manner, substantially without any manual action on the part of the user. Also on the basis of this proposed solution, it is envisaged authenticating control of the access to a private area by means of a check based on the mere presence of the legitimate owner of a digital identity in the vicinity of a transaction management device, also called access transit management device, instead of known verification means, such as the username and password.

On the basis of the proposed solution described above, the technical problem is solved by a method for authenticating and controlling a transaction according to the attached claim 1.

Further characteristic features and advantages of the method for controlling a transaction according to the present invention will become clear from an example of embodiment thereof provided solely by way of a non-limiting example with reference to the attached drawings.

### Brief description of the drawings

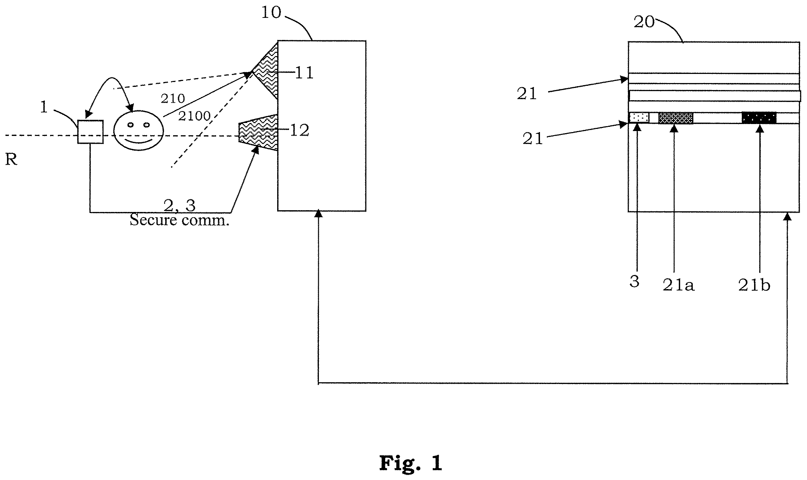

The figure shows a logic diagram of the control method according to the present invention.

### Detailed description of the invention

With reference to the attached figure, an example of embodiment of the method for controlling a transaction according to the present invention, for example a banking transaction which involves the debiting of an amount to a user account to be debited and the crediting of a corresponding amount to a product or service provider account to be credited, is described hereinbelow.

As will become clear from the description, the transaction control method is intended also to perform authentication of the identity of a legitimate owner of a digital identity and only for the sake of simplicity, in the following description, reference will be made to a "transaction control method", this being understood however as referring to a "transaction authentication and control method".

In addition, the example given with reference to a transaction is entirely indicative because the term "transaction", in the context of this invention, may also refer to other processes involving access to any digital service normally protected by a username and password or involving a change of status, not necessarily in connection with an account to be debited or credited, for example, document transactions in which a document A, initially without an electronic signature of a user, and therefore in a "to be signed" state, is transformed into a "signed" state as a result of the application of a digital signature by the user.

Even more specifically, the transactions to which the method refers are those which require protection, i.e. protection or verification that the associated requests for changes, involving money or documents, can be attributed with certainty to the user authorized to request them.

Therefore, in light of the above, it is only by way of example that, at least in a first embodiment, the method of the present invention is described with reference to a banking transaction, such as the withdrawal of cash at an ATM.

The method is assisted by electronic means as described below.

An electronic user device 1 is associated with the user. In the example of the ATM withdrawal, this device may be an integrated circuit card or a cash withdrawal card but, as will be evident from the following description, it is quite possible for the electronic device to be, for example, a smartphone or another electronic device which is available to the user.

According to the present invention, the device 1 is configured to transmit a predetermined radio signal at predefined time intervals, for example every 5 seconds. The radio signal comprises information about a public key 2 of the electronic device and identification information of the user 3.

It is envisaged that this information will be transmitted not continuously but only under predetermined conditions, for example in the vicinity of a management device 10. In this case, it is the management device 10 which sends a wake-up signal to the electronic device 1, following which the electronic device 1 starts to transmit the aforementioned information 2, 3.

In this respect, the management device 10 is a transaction management device, normally located in a public place, for example outside or inside a bank or in a shopping centre, and is equipped with radio reception/transmission means 11 and video recording means 12 or image recording means, such as a camera.

The video recording means 12 are designed to acquire biometric profiles of the user.

The term "biometric profile", in the following description, is understood as meaning any of the multiple intrinsic characteristics which can be uniquely associated with a user and therefore allow him/her to be distinguished in an unmistakable manner, such as the somatic features, the iris and the facial outlines, as well as the tone of voice or other characteristics resulting from the biological uniqueness of the user.

The transaction management device 10 is connected, for example via the Internet or other communication systems or networks, to a remote device which stores a database 20 containing the biometric profiles 21 of the users.

The database 20 is populated during a user profiling step where each user is required to acquire at least two different biometric profiles 21a, 21b and during which said two biometric profiles of the said user are associated with the identification key 3 of the user and the public key 2 of the electronic device 1 of the user. The two biometric profiles are, for the purpose of exemplifying the description, the image of the face 21a and the tone of the user's voice.

The identification information 3 and the public key 2 are therefore stored in the electronic device 1 of the user and in the remote database 20.

When the electronic device 1 enters within a predefined range of the transaction management device 10, the transaction management device 10 acquires the radio signal emitted by the electronic device 1 and establishes a secure communication based on the public key 2.

In particular, it is envisaged that secure communication is only established if the predetermined radio signal is recognized by the transaction management device 10. The radio signal, for example, may have a specific characteristic, be it the signal modulation or frequency, or other. In the absence of such a characteristic, the transaction management device 10 does not establish any secure communication. In this case the procedure is interrupted.

Conversely, if the radio signal transmitted by the electronic device 1 is recognized by the transaction management device 10, and if the user is within a visual range of the video recording means 12, the transaction management device 10 acquires biometric data 210 of the user via the video recording means 12, for example the facial image. This acquisition can take place from different angles, such as multiple images of the face separately or continuously (video), which are then processed in the management device 10 to determine a reference image of the biometric data, to be compared with the biometric profile of the user in the database 20. In a preferred embodiment, the step of comparing the biometric profile of the user stored in the database 20 with the acquired user profile also includes a comparison of a unique identifier of the electronic device 1, preferably its MAC address, with a respective unique identifier (MAC address) stored in the database 20 during the profiling step.

In all the steps described above, no manual action by the user is required, the user being basically only required to be present near the transaction management device, with the electronic device 1 available.

In particular, the management device 10 accesses the database 20 of biometric profiles 21 and retrieves the biometric profile 21a containing identification information 3 associated with the identification information 3 of the user in the predetermined radio signal, and compares the biometric data 21a of the profile 21, and therefore the image of the user's face obtained during the user profiling step, with the biometric data 210 acquired when the user is within the visual range of the video recording means 12.

Only if the biometric data 21a of the user's profile 21 corresponds to the acquired biometric data 210, does the transaction control method continue; otherwise the control method interrupts the communication.

In the event of the data corresponding, further control steps are envisaged whereby, even though manual action by the user is avoided, the security of the transaction is increased.

In particular, the transaction management device 10 acquires a second biometric data 2100 of the user. In this case, of course, the user must still be within the predetermined range of the management device 20.

The second biometric data 2100 is different from the previously acquired biometric data 210. For example, the second biometric data 2100 may be the tone of the voice. However, there is nothing to prevent another type of biometric data from being acquired during this further control step. Therefore, the expression "different biometric data" is not limiting. For example, in a variation of embodiment of the invention, the first acquired biometric data 210 could be the left side (profile) of the user's face and the second acquired biometric data 2100 could be the right side of the face. Alternatively, the second biometric data 2100 could be the user's iris.

Once the second biometric data 2100 has been acquired, the transaction control device retrieves, from the biometric profile 21 in the database 20, second biometric data 21b and compares it with the second biometric data 2100 acquired.

The transaction, in this case the payment, is authorized only if the acquired second biometric data 2100 corresponds to the second biometric data 21b of the profile associated with the user.

Advantageously, therefore, the transaction can be completed with the subsequent steps, without manual action by the user. In fact, by means of an audio acquisition system of the management device 10, which is also designed to acquire the voice as second biometric data 2100, the user can order the amount to be withdrawn at the ATM, as well as specify any other instruction (account statement, mobile phone top-up, etc.) for the management device 10.

According to multiple embodiments of the invention, the control method achieves further optimization and improvement of the security.

For example, according to one embodiment, the step of acquiring, at the input of the transaction management device 10, voice commands from the user, necessary for carrying out further stages of the transaction, is separate from the step of acquiring the second biometric data 2100. Instead, according to another embodiment, the voice commands are used as acquired second biometric data.

Voice commands may be used to set up a banking or financial transaction. However, these commands may serve to perform other functions configured in the management device.

In the event that different payment methods are contemplated, it is further envisaged that the transaction management device may transmit, as a voice message or via radio to the electronic device 1, a request to specify a payment method to be used for the banking transaction. This step is not compulsory.

In addition, the transaction management device 20 transmits via radio to the electronic device 1 a request for confirmation of a bank debit. Alternatively, the bank debit confirmation request is sent to electronic device 1 by means of a telephone communication. This mode may be implemented, for example, when the electronic device 1 is a smartphone. Preferably, the debit request is made by mans of a voice message.

The transaction management device 10 may request confirmation of a bank debit via radio from the electronic device 1. In the presence of a cellular telecommunications network or in the presence of a radio link, for example Bluetooth, confirmation of the bank debit may be requested from the electronic device 1 by means of a radio signal. Said request may there be performed either manually, i.e. by means of a manual operation carried out on the electronic device, or vocally, by means of a microphone of the device (e.g. a smartphone) or the microphone of the management device 10.

Also according to the present invention, the database 20 containing the profiles is a non-centralized database, for example a blockchain. Advantageously, this design of the database 20 achieves greater control of the user profiles and thus increases the security. In one embodiment, the nodes of the blockchain are the electronic devices 1.

As already mentioned, the transaction according to the present invention may be a digital signature process. In this case, the transaction management device 10 displays a document to be digitally signed by the user, and the user's digital signature is applied to the document displayed only if the acquired biometric data 210 and the acquired second biometric data 2100 correspond, respectively, to the biometric data 21a and the second biometric data 21b of the user profile. In this case also, the digital signature of the document is applied without any manual action by the user on the user device 1 or on the transaction management device 10, improving and simplifying human/machine interaction without reducing the security but, on the contrary, improving it. In particular, the digital signature of the document may be applied when a user voice command is given, following verification of the first and second biometric data.

## Claims

1. Method for controlling a secure transaction comprising the following steps:
- providing an electronic user device (1) able to transmit a predetermined radio signal at predefined time intervals, said radio signal comprising information relating to a public key (2) of the electronic user device (1) and information identifying the user (3);
- providing a transaction management device (10) equipped with radio reception/transmission means (11) and video recording means (12);
- providing a database (2) containing biometric profiles (21) of the users, each biometric profile being associated with identification information (3) of a user and a public key of the electronic device (1) of said user;
- when the electronic device (1) enters within a predefined range of the transaction management device (10), acquisition of the radio signal in the transaction management device (10), and establishment, between the transaction management device and the electronic device (1), of a secure communication based on the public key (2), if the predetermined radio signal is recognized by the transaction management device (10);
- if the user is within the visual range of the video recording means (12) and if said radio signal transmitted by the electronic device (1) is recognized by the transaction management device (10), acquisition of biometric data (210) of the user via the video recording means (12) of the transaction management device;
- accessing, via the transaction management device (10), the database (20) containing biometric profiles (21) and retrieving the biometric profile containing identification information (3) associated with the identification information (3) of the user in the predetermined radio signal;
- comparing biometric data (21a) of the user profile (21) with the acquired biometric data (210);
- if the biometric data (21a) of the user profile (21) corresponds to the acquired biometric data (210), performing also the following steps:
- acquiring, in the transaction management device (10), second biometric data (2100) of the user, if the user is still within the predetermined range, the second biometric data (2100) being different from the previously acquired biometric data (210);
- retrieving, from the biometric profile (21) containing identification information (3) associated with the identification information (3) of the user in the predetermined radio signal, second biometric data (21b);
- comparing the second biometric data (21b) of the user profile (21) with the acquired second biometric data (2100);
- authorizing the transaction only if the acquired second biometric data (2100) corresponds to the second biometric data (21b) of the profile associated with the user.

2. Control method according to claim 1, **characterized in that** it comprises the step of acquiring, at the input of the transaction management device (10), voice commands from the user necessary for carrying out further steps of the transaction.

3. Control method according to claim 2, **characterized in that** said voice commands are also used as said acquired second biometric data (2100).

4. Control method according to claim 2, **characterized in that** said voice commands are furthermore used to give instructions for a banking or financial transaction.

5. Control method according to claim 4, **characterized in that** said transaction management device (10) transmits as a voice message or via radio to the electronic device (1) a request to specify a payment method to be used for the banking transaction.

6. Control method according to claim 4 or 5, **characterized in that** said transaction management device (10) transmits as a voice message or via radio to the electronic device (1) a request for confirmation of a bank debit, or said bank debit confirmation is requested to the electronic device (1) by means of a telephone communication, said electronic device (1) being a smartphone.

7. Control method according to claim 6, **characterized in that** said transaction management device (10) confirms the bank debit with one or more conventional payment systems (credit card management systems, banking network payment systems, etc.).

8. Control method according to claim 1, **characterized in that** the database (20) containing the profiles is a non-centralized database, preferably a blockchain.

9. Control method according to claim 1, **characterized in that** the electronic device (1) is a smartphone or a smartcard or other electronic device designed to transmit a radio signal, for example a beacon.

10. Control method according to claim 1, **characterized in that** the transaction management device (10) is an ATM.

11. Control method according to claim 1, **characterized in that** the biometric data is an image of the user's face.

12. Control method according to claim 1, **characterized in that** the second biometric data is the user's voice.

13. Control method according to claim 1, **characterized in that** the transaction is a digital signature process, the transaction management device (1) displays a document to be digitally signed by the user, and the digital signature of the user is applied to the displayed document only if the acquired biometric data (210) and the acquired second biometric data (2100) correspond, respectively, to the biometric data (21a) and the second biometric data (21b) of the user profile.

14. Control method according to claim 13, **characterized in that** the digital signature of the document is applied without any manual operation by the user on the electronic device (1) or on the transaction management device (10).

15. Control method according to claim 13, **characterized in that** the digital signature of the document is applied when a user voice command is given.
